# EUROPÄISCHE PATENTSCHRIFT

(11) **EP 2 881 925 B1**
(45) Veröffentlichungstag und Bekanntmachung des Hinweises auf die Patenterteilung: **07.06.2023**
(21) Anmeldenummer: 14450051.9
(22) Anmeldetag: 27.11.2014
(51) Int. Cl.: G08G 1/01, G08G 1/0967, G05D 1/02, B60W 40/04

(54) **KRAFTFAHRZEUG**
MOTOR VEHICLE
VÉHICULE AUTOMOBILE

(30) Priorität: 29.11.2013 AT 9162013
(43) Veröffentlichungstag der Anmeldung: 10.06.2015
(73) Patentinhaber: Kuhn, Andreas, 5431 Kuchl (AT); Kuhn, Birgit, 5431 Kuchl (AT)
(72) Erfinder: Kuhn, Andreas, 5431 Kuchl (AT); Kuhn, Birgit, 5431 Kuchl (AT)
(74) Vertreter: Gibler & Poth Patentanwälte KG

(56) Entgegenhaltungen:
- DE-A1- 19 954 971
- DE-A1-102011 083 677
- DE-T5-112011 102 664
- DE-T5-112011 102 664
- US-A1- 2002 059 017
- US-A1- 2011 130 964

## Beschreibung

Die Erfindung betrifft ein Kraftfahrzeug gemäß dem Oberbegriff des Patentanspruches 1.

Moderne Kraftfahrzeuge, insbesondere Pkws, weisen eine Vielzahl an Assistenzsystemen auf, welche dem Fahrer beim Steuern des Fahrzeuges helfen und beispielsweise Unfälle vermeiden sollen. Beispielsweise gibt es Systeme, welche bei einem zu dichten Auffahren auf das vordere Fahrzeug ein Warnsignal ausgeben, oder direkt in die Steuerung eingreifen.

Diese Assistenzsysteme sind sehr gut geeignet um die lokal taktischen Aufgabestellungen für das eigentliche Fahren des einzelnen Fahrzeugs auszuführen. Schwieriger wird es allerdings, wenn es darum geht, dass sich die einzelnen Fahrzeuge kooperativ in den Kontext der übergeordneten Verkehrsregelungsaufgabe einbinden. Einerseits hat nicht jedes Fahrzeug Überblick über die gesamte Verkehrslage und ist auch nicht unbedingt in der Lage die Änderungen der Verkehrslage bezüglich der lokalen Besonderheiten zu antizipieren. Andererseits benötigt ein passendes Verkehrsmanagement auch einen, der Verkehrslage angepassten Ausgleich des Individual-Interessen des einzelnen Fahrzeugs mit den übergeordneten Interessen aus Sicht des gesamten Verkehrssystems.

Aus der DE 11 2011 102 664 T5 ist ein Verkehrstaureduzierungssystem umfassend eine Anzahl von mit einer Regeleinheit bestückten Fahrzeugen und einer stationären Verkehrsleitinfrastruktur bekannt. Hierbei melden die mit der Regeleinheit bestückten Fahrzeuge Daten bezüglich deren eigenen Ort, Geschwindigkeit sowie die Entfernung bezüglich des nächsten Fahrzeuges in Fahrtrichtung an eine Verkehrsleitinfrastruktur. Anhand der übermittelten Messdaten der mit der Regeleinheit bestückten Fahrzeuge und der Anzahl der mit der Regeleinheit bestückten Fahrzeuge am gesamten Verkehrsaufkommen wird eine Soll-Entfernung zum nächsten Fahrzeug in Fahrtrichtung errechnet und an die mit der Regeleinheit bestückten Fahrzeuge gesendet, welche dann diese Soll-Entfernung umsetzen.

Aus der DE 10 2011 083 677 A1 ist ein Verfahren zur Prognose einer Verkehrssituation bekannt, bei welcher der Regeleinheit eines Kraftfahrzeuges viele Informationen zugetragen werden, und diese ein Verkehrssituationsmodell erstellt, um mögliche Gefahren vorauszusagen.

Aus der DE 199 54 971 A1 ist ein System zur Beeinflussung des Verkehrsflusses von Fahrzeugen bekannt, bei welchem Messdaten von dem Kraftfahrzeug an eine Verkehrsleiteinrichtung geschickt werden, welchen dann Vorgaben bezüglich der Geschwindigkeit, Längsbeschleunigung und Abstände vorgibt.

Aus der US 2002/0059017 A1 ist ein System zur Verkehrsbeeinflussung bekannt, wobei sogenannte Sondenfahrzeuge die Geschwindigkeit der einzelnen Kolonen an Fahrzeugen vorgeben sollen.

Aus der US 2011/0130964 A1 ist ein System zur Regelung eines Verkehrsteilnehmers bei einer Ampel bekannt. Hierbei sendet das Fahrzeug an eine Verkehrsleiteinrichtung Daten wie Ort und Geschwindigkeit, wobei die Verkehrsleiteinrichtung die optimale Geschwindigkeit in Hinblick auf die Rot/Grün Phase der Ampel berechnet, und diese an das Fahrzeug ausgibt.

Aufgabe der Erfindung ist es daher ein Kraftfahrzeug der eingangs genannten Art anzugeben, mit welchem die genannten Nachteile vermieden werden können, welches einfach ausgebildet ist und mit welchem das Kraftfahrzeug sich gut in den Verkehrsfluss einbinden lassen kann.

Erfindungsgemäß wird dies durch die Merkmale des Patentanspruches 1 erreicht.

Dadurch ergibt sich der Vorteil, dass ein Kraftfahrzeug bereitgestellt werden kann, welches sich gut in den Verkehrsfluss einbinden lässt und dabei einfach und wenig komplex aufgebaut ist. Hierbei empfängt eine Regeleinheit des Kraftfahrzeuges, welche dem Fahrer Anweisungen gibt oder direkt die Steuerung des Kraftfahrzeuges übernimmt, als Vorgabedaten ausgebildete Anweisungen eines übergeordneten Verkehrsleitsystems auf, wobei das Kraftfahrzeug als Regelelement in einem subsidiären Regelsystem fungieren kann. Hierbei ist die Regeleinheit selbstständig in der Lage die umgebende Situation zu erkennen und zu analysieren, wobei das übergeordnete Verkehrsleitsystem lediglich Vorgaben macht, welche die Regeleinheit versucht zu erfüllen. Weiters gibt das Kraftfahrzeug an das Verkehrsleitsystem die Reserven bezüglich seiner Bewegungsmöglichkeit an, womit das Verkehrsleitsystem einen umfassenden Überblick hat, welche Vorgaben ein einzelnes Kraftfahrzeug erfüllen könnte, wodurch die Bewegungen einer Vielzahl an einzelnen Kraftfahrzeugen von dem Verkehrsleitsystem gut miteinander koordiniert werden kann. Dadurch bleibt die Entscheidung auf der Ebene der Regeleinheit, während das übergeordnete Verkehrsleitsystem in der Lage ist auf das Verhalten die einzelnen Kraftfahrzeuge Einfluss zu nehmen, und deren Fahrweise untereinander zu koordinieren. Durch diese Struktur kann das Kraftfahrzeug selbst über die bestmögliche Realisierung der Regelungsziele gemäß seinen Möglichkeiten entscheiden. Wie gut das möglich ist, wird über die Rückmeldung der Reservedaten zurückgespielt, so dass das übergeordnete Verkehrsleitsystem in der Lage ist seine Ziele gegebenenfalls anzupassen. Durch den modularen Aufbau mit den drei Modulen, nämlich dem Situationsinterpretationsmodul, dem Beurteilungsmodul und dem Regelungsmodul können die erforderlichen Schritte in den einzelnen Modulen separat durchgeführt werden, wobei die einzelnen Module unabhängig voneinander programmiert und optimiert werden können.

Weiters betrifft die Erfindung ein Verfahren zum Steuern eines Kraftfahrzeuges gemäß dem Patentanspruch 9.

Aufgabe der Erfindung ist es daher weiters Verfahren anzugeben, mit welchem ein Kraftfahrzeug der eingangs genannten Art einfach und zuverlässig in den Verkehrsfluss einbinden lässt.

Erfindungsgemäß wird dies durch die Merkmale des Patentanspruches 9 erreicht.

Dadurch ergeben sich die vorstehend genannten Vorteile.

Die Erfindung betrifft weiters ein Computerprogrammprodukt gemäß dem Patentanspruch 13.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossene Zeichnung, in welcher lediglich eine bevorzugte Ausführungsform als Schema beispielhaft dargestellt sind, näher beschrieben.

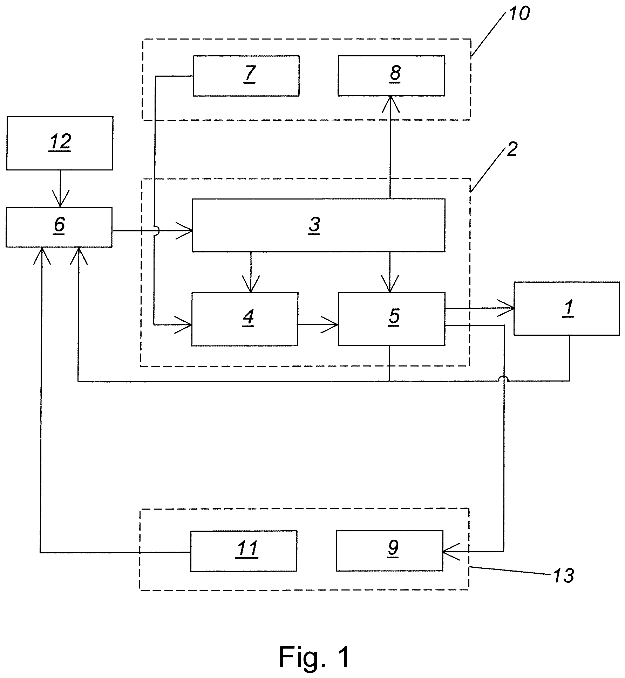

Die Fig. 1 zeigt ein Schema einer bevorzugten Ausführungsform eines Kraftfahrzeuges umfassend eine Regeleinheit 2 zum Ausgeben von Stellgrößen zum Steuern des Kraftfahrzeuges, und eine und eine Kommunikationseinheit 10. Ein Kraftfahrzeug ist ein maschinell angetriebenes, selbstfahrendes und gleisfreies Landfahrzeug. Die Regeleinheit 2 ist ein Teil des Kraftfahrzeuges und dient dazu, dass Kraftfahrzeug zumindest mittelbar zu steuern.

Die Regeleinheit 2 ist eine Einheit, insbesondere eine eigenständige physikalische Komponente oder Teil eines Computersystems des Kraftfahrzeuges, welche die Entscheidung trifft, wie das Fahrzeug fahren soll.

Vorgesehen ist, dass die Regeleinheit 2 ein Situationsinterpretationsmodul 3, ein Beurteilungsmodul 4 und ein Regelungsmodul 5 umfasst.

Weiters ist vorgesehen, dass die Kommunikationseinheit 10 mit dem Situationsinterpretationsmodul 3 und dem Beurteilungsmodul 4 gekoppelt und ausgebildet ist, von einem übergeordneten Verkehrsleitsystem Vorgabedaten 7 zu empfangen und Reservedaten 8 bezüglich der Bewegungsmöglichkeiten des Kraftfahrzeuges an das übergeordnete Verkehrsleitsystem zu senden. Die Vorgabedaten 7 und die Reservedaten 8 können insbesondere digital sein. Weiters kann vorgesehen sein, dass die Kommunikationseinheit 10 eine Sende- und Empfangseinheit umfasst, welche insbesondere nach dem selben Prinzip funktionieren. Alternativ kann vorgesehen sein, dass das Senden der Vorgabedaten 7 und das Empfangen der Reservedaten 8 durch räumlich voneinander getrennte, und insbesondere unterschiedlich ausgestaltete, physikalische Komponenten der Kommunikationseinheit 10 erfolgt. Beispielsweise kann das Empfangen optisch und das Senden mittels Funk erfolgen.

Insbesondere kann vorgesehen sein, dass die Kommunikationseinheit 10 als Funkeinrichtung ausgebildet ist. Hierbei kann die Kommunikationseinheit 10 eine Datenverbindung über Funk, beispielweise mittels WLAN, UMTS oder dergleichen, zwischen dem Kraftfahrzeug und eines Verkehrsleitsystems zu ermöglichen, wodurch das Kraftfahrzeug Zielvorgaben des übergeordneten Verkehrsleitsystems erhalten kann. Durch den Funk können Daten des Verkehrsleitsystems über weite Strecken transportiert werden, im Gegensatz zu den Verkehrsschildern oder Ampeln, welche nur in der unmittelbaren Umgebung von einem Sensorsystem 12 erfasst werden können. Weiters können über Funk Daten übermittelt werden, welche von einem Menschen nicht direkt verarbeitbar sind.

Mit der Kommunikationseinheit 10 kann eine sogenannte Car-to-Infrastructure-Communication und/oder eine sogenannte Car-to-Car-Communication bereitgestellt werden.

Vorgesehen ist, dass das Situationsinterpretationsmodul 3 ausgebildet ist, anhand von Eingangsparametern 6 ein Situationsmodell mit Modellparametern zu erstellen und aus dem Situationsmodell die Reservedaten 8 zu ermitteln, dass das Beurteilungsmodul 4 eingangseitig mit dem Situationsinterpretationsmodul 3 gekoppelt ist und ausgebildet ist, anhand zumindest eines ersten Bewertungskriteriums, zumindest eines durch die Vorgabedaten 7 vorgegebenen zweiten Bewertungskriteriums und der Modellparameter eine Regelungsstrategievorgabe zu ermitteln, und dass das Regelungsmodul 5 eingangseitig mit dem Situationsinterpretationsmodul 3 und dem Beurteilungsmodul 4 gekoppelt ist und ausgebildet ist, anhand der Regelungsstrategievorgabe und der Modellparameter die Stellgrößen zu ermitteln und auszugeben.

Weiters ist ein Verfahren zum Steuern des Kraftfahrzeuges mit der Regeleinheit 2 vorgesehen, wobei in dem Situationsinterpretationsmodul 3 der Regeleinheit 2 anhand von den Eingangsparametern 6 das Situationsmodell mit den Modellparametern erstellt, und die Modellparameter an das Beurteilungsmodul 4 und das Regelungsmodul 5 der Regeleinheit 2 ausgegeben werden, wobei in dem Situationsinterpretationsmodul 3 aus dem Situationsmodel die Reservedaten 8 bezüglich der Bewegungsmöglichkeiten des Kraftfahrzeuges ermittelt und über die Kommunikationseinheit 10 an das übergeordnete Verkehrsleitsystem gesendet werden, wobei von der Kommunikationseinheit 10 Vorgabedaten 7 des übergeordneten Verkehrsleitsystems empfangen und an das Beurteilungsmodul 4 weitergeleitet werden, wobei in dem Beurteilungsmodul 4 anhand zumindest eines ersten Bewertungskriteriums, zumindest eines durch die Vorgabedaten 7 vorgegebenen zweiten Bewertungskriteriums und der Modellparameter die Regelungsstrategievorgabe ermittelt, und an das Regelungsmodul 5 ausgegeben wird, wobei in dem Regelungsmodul 5 anhand der Regelungsstrategievorgabe und der Modellparameter die Stellgrößen ermittelt werden, wobei das Kraftfahrzeug zumindest mittelbar anhand dieser Stellgrößen gesteuert wird.

Dadurch ergibt sich der Vorteil, dass ein Kraftfahrzeug bereitgestellt werden kann, welches sich gut in den Verkehrsfluss einbinden lässt und dabei einfach und wenig komplex aufgebaut ist. Hierbei empfängt eine Regeleinheit 2 des Kraftfahrzeuges, welche dem Fahrer Anweisungen gibt oder direkt die Steuerung des Kraftfahrzeuges übernimmt, als Vorgabedaten 7 ausgebildete Anweisungen eines übergeordneten Verkehrsteitsystems, wobei das Kraftfahrzeug als Regelelement in einem subsidiären Regelsystem fungieren kann. Hierbei ist die Regeleinheit 2 selbstständig in der Lage die umgebende Situation zu erkennen und zu analysieren, wobei das übergeordnete Verkehrsleitsystem lediglich Vorgaben macht, welche die Regeleinheit 2 versucht zu erfüllen. Weiters gibt das Kraftfahrzeug an das Verkehrsleitsystem die Reserven bezüglich seiner Bewegungsmöglichkeit an, womit das Verkehrsleitsystem einen umfassenden Überblick hat, welche Vorgaben ein einzelnes Kraftfahrzeug erfüllen könnte, wodurch die Bewegungen einer Vielzahl an einzelnen Kraftfahrzeugen von dem Verkehrsleitsystem gut miteinander koordiniert werden kann. Dadurch bleibt die Entscheidung auf der Ebene der Regeleinheit 2, während das übergeordnete Verkehrsleitsystem in der Lage ist auf das Verhalten die einzelnen Kraftfahrzeuge Einfluss zu nehmen, und deren Fahrweise untereinander zu koordinieren. Durch diese Struktur kann das Kraftfahrzeug selbst über die bestmögliche Realisierung der Regelungsziele gemäß seinen Möglichkeiten entscheiden. Wie gut das möglich ist, wird über die Rückmeldung der Reservedaten zurückgespielt, so dass das übergeordnete Verkehrsleitsystem in der Lage ist seine Ziele gegebenenfalls anzupassen. Durch den modularen Aufbau mit den drei Modulen, nämlich dem Situationsinterpretationsmodul 3, dem Beurteilungsmodul 4 und dem Regelungsmodul 5 können die erforderlichen Schritte in den einzelnen Modulen separat durchgeführt werden, wobei die einzelnen Module unabhängig voneinander programmiert und optimiert werden können.

Das Situationsinterpretationsmodul 3 ist ausgebildet anhand von Eingangsparametern 6 ein Situationsmodell mit Modellparametern zu erstellen. Zur Ausgabe der Modellparameter an das Beurteilungsmodul 4 und das Regelungsmodul 5 ist ein Ausgang des Situationsinterpretationsmoduls 3 mit einem Eingang des Beurteilungsmoduls 4 und des Regelungsmoduls 5 gekoppelt. Diese Koppelung kann beispielsweise als physikalische Schnittstelle oder Schnittstelle zwischen zwei Programmen oder Softwarefunktionen ausgebildet sein.

Die Eingangsparameter 6 können hierbei insbesondere Sensordaten eines Sensorsystems 12 des Kraftfahrzeuges umfassen. Hierfür kann vorgesehen sein, dass das Kraftfahrzeug ein Sensorsystem 12 umfasst, welches Sensorsystem Umfeldsensoren zur Erfassung und Interpretation der Fahrzeugumgebung umfasst. Das Sensorsystem 12 kann hierbei unterschiedlich ausgebildete und nach unterschiedlichen Prinzipien funktionierende Sensoren umfassen. Insbesondere kann das Sensorsystem 12 derart ausgebildet sein, dass das Sensorsystem 12 umgebende Objekte mittels Licht, beispielsweise als Kamera, als Lidar oder als PMD-Sensor, mittels Radar oder mittels Ultraschall erfasst. Die Sensordaten können insbesondere digital aufbereitet sein.

Weiters kann vorgesehen sein, dass zumindest Teile der Eingangsparameter 6 Daten über die Verkehrslage beinhalten, welche über Funk, Internet und/oder Car2X-Kommunikation bereitgestellt werden. Die Car2X-Kommunikation umfasst insbesondere eine Car-to-Infrastructure-Communication und/oder eine Car-to-Car-Communication.

Anhand dieser Eingangsparameter 6 wird von dem Situationsinterpretationsmodul 3 ein Situatiorismodell erstellt, welches insbesondere die Position und Geschwindigkeit des Kraftfahrzeuges und/oder anderer Objekte, beispielsweise andere Verkehrsteilnehmer oder feste Hindernisse, beinhaltet. Dabei können die Positionen und Geschwindigkeiten jeweils auf ein absolutes und/oder relatives Bezugssystem bezogen sein. Das Situationsmodell kann weiters die umgebende Fahrbahnbeschaffenheit berücksichtigen. Hierbei kann aus der Vielzahl der Daten der Eingangsparameter 6 ein Situationsmodell erstellt werden, welches auf sich einige Modellparameter reduzieren lässt, wobei sich aus den Modellparametern des Situationsmodells dieses reproduzieren lässt. Das Situationsinterpretationsmodul 3 ermittelt daher aus der Vielzahl der verfügbaren Daten einen Überblick über das Geschehen um das Kraftfahrzeug und ermittelt aus diesem Situationsmodell elektronisch weiter verarbeitbare Modellparameter. Die Modellparameter können hierbei insbesondere Daten über die Position und aktuelle Geschwindigkeit des Kraftfahrzeuges und der umgebenden Objekte beinhalten. Weiters können die Modellparameter auch Informationen über die Reserven bezüglich der Bewegungsfreiheit des Kraftfahrzeuges und/oder über die lokale Verkehrsdichte und/oder über die fahrdynamische Möglichkeiten aufgrund der Fahrbahnverhältnisse aufweisen. Die Realisierung der Abschätzung der Reserven kann insbesondere mit virtuellen Sensoren erfolgen.

Weiters kann vorgesehen sein, dass das Situationsmodell und die Modellparameter weiters eine Wahrscheinlichkeitsanalyse enthalten, wie sich andere Verkehrsteilnehmer in naher Zukunft verhalten könnten, insbesondere durch die Erstellung sogenannter Trajektorien-Bündel, welche eine Zusammenfassung der möglichen Fortbewegungstrajektorien der übrigen Verkehrsteilnehmer umfasst. Das Situationsmodell kann daher auch eine Prognose der Verkehrssituation enthalten und als Modellparameter beispielsweise auch Kollisionswarnungen oder Unfallwahrscheinlichkeiten, insbesondere Schätzungen des Unfallrisikos aufgrund der lokalen Verkehrssituation, ausgeben. Das Situationsinterpretationsmodul 3 kann daher bevorzugt auch als Situationsinterpretations- und Prognose- Modul bezeichnet werden.

Insbesondere kann vorgesehen sein, dass das Situationsmodell vergangene Zustände und den aktuellen Zustand herannimmt, um eine Situation des Kraftfahrzeuges in naher Zukunft vorherzusagen, und diese prädiktive Zustandsvoraussage ebenfalls in den Modellparametern enthalten sind. Beispielsweise kann bei der Annäherung an eine Kurve das Situationsinterpretationsmodul 3 schon anhand der Erfahrung vorhersagen, mit welcher Trajektorie das Kraftfahrzeug die Kurve am wahrscheinlichsten durchqueren wird, und ob die aktuelle Geschwindigkeit beispielsweise zu hoch für eine gefahrlose Durchfahrt der Kurve ist.

In dem Beurteilungsmodul 4 wird anhand zumindest eines ersten Bewertungskriteriums, zumindest eines durch die Vorgabedaten 7 vorgegebenen zweiten Bewertungskriteriums und der Modellparameter eine Regelungsstrategievorgabe ermittelt. Hierbei kann das Beurteilungsmodul 4 die passende Regelungsstrategie für die einzelnen Verkehrssituationen ermitteln und eine Regelungsstrategievorgabe ausgeben. Zur Ausgabe der Regelungsstrategievorgabe an das Regelungsmodul 5 ist ein Ausgang des Beurteilungsmoduls 4 mit einem Eingang des Regelungsmoduls 5 gekoppelt.

Das zumindest eine erste Bewertungskriterium kann hierbei Zielvorgaben sein, welche fix vorgegeben sind. Fix vorgegebene Zielvorgaben als erstes Bewertungskriterium können beispielsweise die Vorgaben sein, nicht von der Straße abzukommen, keine Hindernisse zu rammen und zu anderen Verkehrsteilnehmer einen Mindestabstand nicht zu unterschreiten.

Erfindungsgemäß ist vorgesehen dass das zumindest eine erste Bewertungskriterium einen vorgebbaren individuellen Fahrstil beinhaltet. Beispielsweise kann der vorgebbare individuelle Fahrstil beinhalten, schnell, sportlich, komfortabel oder treibstoffschonend zu fahren, wobei die Vorgaben ein Bündel an unterschiedlichen ersten Bewertungskriterien enthalten. Der vorgebbare individuelle Fahrstil kann beispielsweise fahrzeugspezifisch vorgegeben sein. Weiters kann vorgesehen sein, dass dem Kraftfahrzeug der Zweck einer Fahrt vorgegeben wird, und daraus der vorgebbare individuelle Fahrstil ermittelt wird. Weiters kann vorgesehen sein, dass ein Fahrer oder ein Fahrgast den vorgebbaren individuellen Fahrstil vorgeben kann.

Bevorzugt kann weiters vorgesehen sein, dass das zumindest eine erste Bewertungskriterium Vorgaben bezüglich dem Grad der Kooperation der einzelnen Verkehrsteilnehmer entsprechend der Verkehrssituation vorgibt.

Die ersten Bewertungskriterien sind hierbei in dem Beurteilungsmodul 4 abgespeichert. Weiters ist vorgesehen, dass das Beurteilungsmodul 4 mit der Kommunikationseinheit 10 verbunden ist, wobei die Kommunikationseinheit 10 ausgebildet ist, die Vorgabedaten 7 des übergeordneten Verkehrsleitsystems zu empfangen, und dass die empfangenen Vorgabedaten 7 der Kommunikationseinheit 10 von dem Beurteilungsmodul 4 als zweite Bewertungskriterien verwendet werden.

Weiters ist vorgesehen, dass das Situationsinterpretationsmodul 3 mit der Kommunikationseinheit 10 verbunden ist, und dass das Situationsinterpretationsmodul 3 ausgebildet ist sich aus dem Situationsmodell ergebende Reservedaten 8 bezüglich der Bewegungsmöglichkeiten des Kraftfahrzeuges zu ermitteln und über die Kommunikationseinheit 10 an das übergeordnete Verkehrsleitsystem zu senden. Diese Bewegungsmöglichkeiten des Kraftfahrzeuges können auch als Verkehrsreserve des Kraftfahrzeuges bezeichnet werden. Hierbei kann vorgesehen sein, dass in dem Situationsinterpretationsmodul 3 aus dem Situationsmodel Reservedaten 8 bezüglich der Bewegungsmöglichkeiten des Kraftfahrzeuges ermittelt und über die Kommunikationseinheit 8 an das übergeordnete Verkehrsleitsystem sendet. Die Reservedaten 8 enthalten Daten bezüglich den Reserven der Bewegungsmöglichkeiten des Kraftfahrzeuges, insbesondere bezüglich der Geschwindigkeit oder des Abstandes zum Vordermann, welche das Kraftfahrzeug hat aber nicht ausschöpft, beispielsweise weil ein Vordermann eine höhere Geschwindigkeit unterbindet oder der vorgebbare individuelle Fahrstil eine höhere Geschwindigkeit nicht vorsieht. Dadurch ergibt sich der Vorteil, dass dadurch das übergeordnete Verkehrsleitsystem in der Lage ist zu erkennen, welche persönlichen Reserven die einzelnen Kraftfahrzeuge aufweisen, und diesen danach Vorgaben in Form von weiteren Bewertungskriterien machen kann.

Besonders bevorzugt kann vorgesehen sein, dass das Kraftfahrzeug in einem hierarchischen Regelsystem eingebunden ist, wobei das Verkehrsleitsystem mehrere Regelebenen aufweisen kann, beispielsweise in der Reihenfolge Verkehrsknoten, Verkehrslinie und Verkehrsstrecke. Dabei kann die Regelung hierarchisch und subsidiär erfolgen.

Das Kraftfahrzeug empfängt von der hierarchisch unmittelbar übergeordneten Regelebene des Verkehrsteitsystems die Vorgabedaten 7 und sendet an diese die Reservedaten 8.

Dabei kann das Kraftfahrzeug eine Element der Regelungshierarchie des Verkehrsleitsystems ausbilden, wobei die Regelung in der jeweils hierarchisch untersten möglichen Regelungsebene erfolgt.

Das Zusammenspiel zwischen dem übergeordneten Verkehrsleitsystem und dem Kraftfahrzeug erfolgt durch die Vorgabe von Regelungszielen durch die übergeordnete Regelebene, welche durch die Übermittelung der Vorgabedaten 7 erfolgt, und welche Regelungsziele die untergeordnete Regelebene, also das Kraftfahrzeug, versucht so gut wie möglich zu erfüllen. Hierarchisch gesehen erfolgt die Kommunikation von unten nach oben über die Bekanntgabe der Reserven der untergeordneten Regelebene, welche durch die Übermittelung der Reservedaten 8 erfolgt. Dadurch kann die übergeordnete Regelebene erkennen, welche Zielvorgaben für die einzelnen Regelelemente der untergeordneten Regelebene möglich sind. Dadurch kann ein subsidiär aufgebautes Regelungssystem mit einer Vielzahl an Hierarchieebenen aufgebaut werden, wobei die einzelnen Regelelemente die größtmögliche Freiheit besitzen die eigenen Ziele voranzutreiben.

Insbesondere kann ein Verfahren zum Betreiben eines Verkehrsleitsystems vorgesehen sein, wobei ein hierarchisch übergeordnetes Verkehrsleitsystem Reservedaten 8 von hierarchisch untergeordneten Kraftfahrzeugen empfängt, anhand der Reservedaten 8 die Verkehrssituation beurteilt, aus dieser Beurteilung Zielvorgaben für die einzelnen Kraftfahrzeuge erstellt, und die Zielvorgaben mittels Vorgabedaten 7 an die Kraftfahrzeuge übersendet.

Insbesondere kann vorgesehen sein, dass die zweiten Bewertungskriterien Vorgaben bezüglich dem Verhalten gegenüber anderen Kraftfahrzeugen beinhalten. Hierbei kann das übergeordnete Verkehrsleitsystem das Zusammenspiel der einzelnen Kraftfahrzeuge untereinander regeln, um beispielsweise eine Vergleichmäßigung des Verkehrs zu ermöglichen und Staubildungen zu verhindern. Besonders bevorzugt kann vorgesehen sein, dass das übergeordnete Verkehrsleitsystem an alle Kraftfahrzeuge in einem vorgegebenen Bereich die selben zweiten Bewertungskriterien vorgibt. Mit anderen Worten, dass die zweiten Bewertungskriterien keine konkreten Handlungsanweisungen sind, sondern lediglich Vorgaben bezüglich des Fahrstils, beispielsweise ein defensiver Fahrstil zur Stauvermeidung. Dadurch können die Entscheidungen weiterhin auf der Regelungsebene der Kraftfahrzeuge getroffen werden, wodurch der Rechenaufwand für das übergeordnete Verkehrsleitsystem gering bleibt.

Erfindungsgemäß ist vorgesehen, dass das übergeordnete Verkehrsleitsystem individuelle zweite Bewertungskriterien an die einzelnen Kraftfahrzeuge vorgibt. Ein derartiges zweites Bewertungskriterium kann beispielsweise sein, eine Umleitung zu verwenden, um eine Staubildung an einer gewissen Straße zu verhindern. Hierbei kann verhindert werden, dass alle Kraftfahrzeuge gleichzeitig die Umleitung verwenden und diese dadurch verstopfen.

Besonders bevorzugt kann vorgesehen sein, dass die ersten und zweiten Bewertungskriterien des Beurteilungsmoduls 4 mit einer Priorität versehen werden, wobei Bewertungskriterien mit hoher Priorität vor einem Bewertungskriterium mit geringerer Priorität berücksichtigt werden. Dadurch kann erreicht werden, dass das Beurteilungsmodul 4 zu einer vernünftigen und schnellen Entscheidungsfindung gelangt. Beispielsweise können gesetzliche Vorgaben als Muss-Kriterium verwendet werden und andere Vorgaben lediglich als Kann-Kriterium verwendet werden. Die Reihenfolge der Priorität kann hierbei insbesondere sein, dass sicherheitsrelevante Bewertungskriterien, beispielsweise die Vorgabe der Mindestabstände zu anderen Verkehrsteilnehmern, die höchste Priorität haben, dass Bewertungskriterien einer übergeordneten Regelungsebene eine mittlere Priorität haben, und dass Bewertungskriterien bezüglich des bevorzugten Fahrstils die geringste Priorität haben.

Das Beurteilungsmodul 4 vergleicht die Modellparameter des Situationsmodells mit den ersten und zweiten Bewertungskriterien und erstellt daraus eine Regelungsstrategievorgabe. Die Regelungsstrategievorgabe ist hierbei die Strategie, welche das Kraftfahrzeug in naher Zukunft zu erfüllen hat, um den Bewertungskriterien bestmöglich zu entsprechen. Derartige Regelungsstrategievorgabe können beispielsweise die Vorgabe beinhalten den Abstand zu einem vorgehenden Kraftfahrzeug zu verändern, abzubiegen, die Spur zu wechseln oder unter Beibehaltung der Geschwindigkeit dem Straßenverlauf zu folgen.

Das Regelungsmodul 5 ermittelt anhand der Regelungsstrategievorgabe und der Modellparameter die Stellgrößen, anhand welcher das Kraftfahrzeug gesteuert werden soll. Das Regelungsmodul 5 übernimmt daher die Aufgabe, aus den Regelungsstrategievorgabe konkrete, als Stellgrößen ausgebildete, Handlungsanweisungen zu ermitteln und diese weiterzugeben.

Insbesondere kann vorgesehen sein, dass das Regelungsmodul 5 eine Vielzahl an unterschiedlichen Reglern aufweist, und dass durch die Regelungsstrategievorgabe ein Regler ausgesucht wird. Die Regler des Regelungsmoduls 5 können für unterschiedliche Verkehrssituationen optimiert sein, wobei das Beurteilungsmodul 4 durch die Wahl der Regelungsstrategievorgabe den Regler aussucht, welcher am besten für die vom Situationsinterpretationsmodul 3 erstellten Situationsmodell geeignet ist.

Weiters kann vorgesehen sein, dass als Eingangsparameter 6 auch die ausgegebenen Stellgrößen des Regelungsmoduls 5 verwendet werden. Durch Einbeziehung der Stellgrößen des Regelungsmoduls 5 als Eingangsparameter 6 kann das Situationsinterpretationsmodul 3 die zukünftige Situation des, insbesondere autonomen, Kraftfahrzeuges besser abschätzen, da diese beispielsweise weiß, ob das Kraftfahrzeug beschleunigen, abbremsen oder einen Richtungswechsel durchführen wird.

Ein großer Vorteil des Aufbaus der Regeleinheit 2 und deren Unterteilung in Situationsinterpretationsmodul 3, Beurteilungsmodul 4 und Regelungsmodul 5 ist, dass diese unabhängig voneinander programmiert, optimiert oder angelernt werden können. Beispielsweise kann das Situationsinterpretationsmodul 3 in ein Testfahrzeug eingesetzt werden, welche über ein erweitertes Sensorsystem verfügt, welches über das Sensorsystem 12 des serienmäßigen Kraftfahrzeuges hinausgeht. Hierbei werden für die Eingangsparameter 6 lediglich jene Sensordaten verwendet welche beim serienmäßigen Kraftfahrzeug zur Verfügung stehen. Das Situationsmodell und die Modellparameter werden mit den zusätzlichen Sensordaten verglichen, um zu überprüfen, wieweit das Situationsmodell des Situationsinterpretationsmoduls 3 mit der Realität übereinstimmt. Das Anlernen des Beurteilungsmoduls 4 kann beispielsweise dadurch erfolgen, dass ein Testfahrer mit dem Kraftfahrzeug fährt, insbesondere auf anspruchsvollen Strecken, und das Beurteilungsmodul 4 die Entscheidungen des Testfahrers mit den ausgegebenen Regelstrategievorgaben abgleicht, und versucht eine Übereinstimmung zu erreichen. Das Regelungsmodul 5 kann wiederum unabhängig von den anderen Modulen an ein spezielles Fahrzeugmodell angepasst werden.

Insbesondere kann vorgesehen sein, dass das Kraftfahrzeug eine Warn- und Informationseinrichtung für einen Fahrer beinhaltet.

Hierbei kann vorgesehen sein, dass die Stellgrößen der Regeleinheit 2 als Stellgrößen für die Warn- und Informationseinrichtung verwendet werden, wobei die Steuerung des Kraftfahrzeuges mittelbar über die Regeleinheit 2 erfolgt, der Fahrer allerdings die Entscheidungsgewalt hat. Hierbei können die Stellgrößen beispielsweise die Information einer Kollisionswarnung haben oder eine Vorgabe defensiv zu Fahren, beispielsweise da eine Staugefahr besteht. Weiters kann die Regeleinheit 2 von einem vorausliegenden Verkehrsknoten die Information für Dauer und Takt einer Grünphase übermittelt bekommen, wobei die Regeleinheit 2 die Information geben kann die Geschwindigkeit zu erhöhen, um den Verkehrsknoten zu passieren, oder langsam abzubremsen, da ein Erreichen des Verkehrsknotens in der Grünphase nicht mehr möglich ist.

Besonders bevorzugt kann vorgesehen sein, dass eine Steuereinrichtung 1 eingangseitig mit der Regeleinheit 2 gekoppelt ist, und dass die Steuereinrichtung 1 anhand der von der Regeleinheit 2 ausgegebenen Stellgrößen das Kraftfahrzeug direkt steuert. Hierbei kann das Kraftfahrzeug mittels der Steuereinrichtung 1 anhand der von der Regeleinheit 2 ausgegebenen Stellgrößen gesteuert wird. Die Steuereinrichtung 1 des Kraftfahrzeuges ist dazu vorgesehen, das Kraftfahrzeug zu steuern. Die Steuereinrichtung kann hierbei eine Vielzahl an Steuerelementen aufweisen, welche bei einem Kraftfahrzeug insbesondere dazu ausgebildet sind die Fahrdynamik des Kraftfahrzeuges in der Längsrichtung, insbesondere über die Bremse oder die Motorsteuerung, und um die Querrichtung, insbesondere über die Lenkung, zu beeinflussen. Zu Steuerung der Steuerelemente der Steuereinrichtung 1 werden Stellgrößen benötigt, welche im Normalbetrieb von einem Fahrer vorgegebene werden, beispielsweise über die Stellung des Lenkrades, Gaspedals oder Bremspedals.

Insbesondere kann vorgesehen sein, dass die Steuereinrichtung 1 ausgehend von den Stellgrößen Regelgrößen einstellt, und diese Regelgrößen überwacht. Diese Regelgrößen können beispielsweise der aktuelle Einschlag der Lenkung und/oder eine Richtungsvorgabe für das Fahrzeug sein.

Weiters kann vorgesehen sein, dass als Eingangsparameter 6 auch Regelgrößen der Steuereinrichtung 1 verwendet werden. Durch Einbeziehung der Regelgrößen der Steuereinrichtung 1 als Eingangsparameter 6 kann das Situationsinterpretationsmodul 3 schnell und direkt den Istzustand des Fahrzeuges ermitteln und ist hierfür nicht auf zusätzliche Sensordaten angewiesen.

Alternativ kann vorgesehen sein, dass die Regeleinheit 2 mittelbar durch Anweisungen an den Fahrer die Steuereinrichtung 1 bedient.

Die Regeleinheit 2 und die Steuereinrichtung 1 können hierbei ein Fahrerassistenzsystem ausbilden, welches selbstständig in die Steuerung des Kraftfahrzeuges eingreift. Dabei kann das Eingreifen indirekt über den Fahrer und/oder direkt erfolgen.

Besonders bevorzugt kann vorgesehen sein, dass das Kraftfahrzeug ein autonomes Kraftfahrzeug ist. Ein autonomes Kraftfahrzeug ist ein Kraftfahrzeug, dass ohne menschliche Hilfe selbsttätig navigieren, fahren und Hindernissen ausweichen kann. Dass Kraftfahrzeug kann insbesondere ein Pkw oder ein Lkw sein. Bei einem autonomen Kraftfahrzeug werden diese Stellgrößen für die Steuereinrichtung 1 von der Regeleinheit 2 vorgegeben, wobei die Regeleinheit 2 hierbei die Aufgaben übernimmt, welche bei einem nicht-autonomen Kraftfahrzeug von dem Fahrer übernommen werden. Die Stellgrößen können insbesondere einen Lenkwinkel, eine Betätigung der Bremse, eine Vorgabe für die Motordrehzahl oder einen Schaltvorgang für ein Getriebe beinhalten. Die Steuereinrichtung 1 wird anhand dieser Stellgrößen betrieben und das autonome Kraftfahrzeug anhand dieser Stellgrößen gesteuert. Dadurch kann erreicht werden, dass das autonome Kraftfahrzeug nicht nur die von dem Sensorsystem 12 erfasste Umgebung in seine Entscheidungsfindung miteinbezieht, sondern die Verkehrssituation in einem größeren Umfeld berücksichtigen kann.

Besonders bevorzugt kann vorgesehen sein, dass das Situationsinterpretationsmodul 3, das Beurteilungsmodul 4 und/oder das Regelungsmodul 5 ein Machine-Learning-Modell, ein datengetriebenes Modell und/oder ein beispielbasiertes Modell umfasst. Hierbei kann vorgesehen sein, für das Situationsinterpretationsmodul 3, das Beurteilungsmodul 4 und/oder das Regelungsmodul 5 ein Machine-Learning-Modell, ein datengetriebenes Modell und/oder ein beispielbasiertes Modell verwendet wird. Dadurch kann sichergestellt werden, dass die Regeleinheit 2 das Fahrverhalten des autonomen Kraftfahrzeuges gut abbilden kann, wobei eine analytische Darstellung nicht erforderlich ist und das erwünschte Verhalten der Regeleinheit 2 antrainiert werden kann.

Machine-Learning-Modelle, datengetriebene Modelle oder beispielbasierte Modelle können beispielsweise künstliche neuronale Netze, Regression- oder Klassifikationsbäume, Support Vector Machines und/oder Look-Up-Tables und/oder Komitees von Machine-Learning-Modellen sein. Es können auch hybride Modelle vorgesehen sein, welche beispielsweise Machine-Learning-Modelle mit konventionellen analytischen Modellen und/oder regelbasierten Modellen kombinieren.

Weiters kann vorgesehen sein, dass das Situationsinterpretationsmodul 3, das Beurteilungsmodul 4 und/oder das Regelungsmodul 5 als eigenständige mittels Schnittstellen gekoppelte Module ausgebildet sind.

Hierbei können die einzelnen Module als physikalisch getrennte Gebilde ausgebildet sein, welche an Schnittstellen schaltungstechnisch verbunden sind.

Insbesondere kann vorgesehen sein, dass die einzelnen Module Programme sind, welche über die Schnittstellen miteinander kommunizieren können. Die einzelnen Module können hierbei in den internen Speicher einer Recheneinheit des Kraftfahrzeuges abgespeichert sein.

Das Zusammenspiel zwischen dem, insbesondere autonomen, Kraftfahrzeug und dem übergeordneten Verkehrsleitsystem kann anhand der drei folgenden Beispiele veranschaulicht werden.

Im ersten Beispiel bewegt sich das autonome Kraftfahrzeug alleine auf einer Straße. Es gibt weder andere Verkehrsteilnehmer noch weitere Bewertungskriterien eines übergeordneten Verkehrsleitsystems. Das autonome Kraftfahrzeug wird sich daher uneingeschränkt nach dem vorgebbaren individuellen Fahrstil und den fahrdynamischen Möglichkeiten bewegen.

Im zweiten Beispiel bewegt sich das autonome Kraftfahrzeug gleichzeitig mit anderen Kraftfahrzeugen auf der Straße. Die Fahrmöglichkeiten hängen einerseits von den Leistungsparametern des autonomen Kraftfahrzeuges ab und andererseits von dem Verhalten der anderen Kraftfahrzeuge. Beispielsweise könnte das autonome Kraftfahrzeug aufgrund der fahrdynamischen Möglichkeiten schneller fahren, allerdings verhindert das ein langsam fahrendes Kraftfahrzeug in Fahrtrichtung. Das autonome Kraftfahrzeug sendet daher die Reservedaten 8 bezüglich der möglichen Geschwindigkeit an das übergeordnete Verkehrsleitsystem. Das übergeordnete Verkehrsleitsystem beurteilt die Lage anhand der gemeldeten Reserven und der Verkehrsdichte, und kann dann eine Regelung des Verkehrs durchführen. Beispielsweise kann das Verkehrsleitsystem dem Kraftfahrzeug in Fahrtrichtung, wenn auch dieses eine Geschwindigkeitsreserve aufweist, das zweite Bewertungskriterium vorgeben eine Mindestgeschwindigkeit zu fahren, wobei dieses Bewertungskriterium gewichtiger ist als das Bewertungskriterium des individuell vorgegebenen treibstoffsparenenden Fahrstils. Falls die Verkehrsdichte dies nicht zulässt, kann das Verkehrsleitsystem dem autonomen Kraftfahrzeug die Vorgabe geben defensiver zu fahren und/oder konform der Möglichkeiten aufgrund der gegebenen Verkehrssituation zu fahren.

Im dritten Beispiel nähert sich das autonome Kraftfahrzeug einem Verkehrsknoten, wobei der Verkehrsknoten in der untersten Regelungsebene des übergeordneten Verkehrsleitsystems angeordnet ist. Das autonome Kraftfahrzeug sendet seine Reservedaten 8 an den Verkehrsknoten, wobei der Verkehrsknoten dem autonomen Kraftfahrzeug im Wissen um dessen Reserven mittels der Übermittelung von Vorgabedaten 7 ein zweites Bewertungskriterium vorgibt, mit dem dieses sich optimal in Bezug auf die Knotensituation bewegt. Dies kann beispielsweise ein Beschleunigen sein, um den Verkehrskoten in einer Grünphase noch zu passieren, oder ein energiesparendes Abbremsen.

Das in den drei Beispielen als autonomes Kraftfahrzeug beschriebene Fahrzeug kann auch als nicht-autonomes erfindungsgemäßes Kraftfahrzeug ausgebildet sein.

Das Kraftfahrzeug kann insbesondere eine Reihe von Subsystemen aufweisen, welche ebenfalls eigene, der Regeleinheit 2 untergeordnete, Regelungssysteme 13 darstellen. Derartige untergeordnete Regelungssysteme 13 können beispielsweise die Motorsteuerung, ESP, ABS, Bremsen und dergleichen sein. Diese untergeordneten Regelsysteme können besonders bevorzugt einen ähnlichen Aufbau wie die Regeleinheit 2 mit den drei Modulen aufweisen. Diese untergeordneten Regelungssysteme 13 können daher auch als untergeordnete Regeleinheiten oder als untergeordnetes Regelelement bezeichnet werden. Insbesondere kann vorgesehen sein, dass diese Subsysteme des Kraftfahrzeuges als eigenständige und der Regeleinheit 2 untergeordnete Regelungssysteme 13 ausgebildet sind, welche von der Regeleinheit 2 über die Vorgabe von Zielen bei der Rückmeldung von Reserven geregelt werden. In der Regelhierarchie entspricht das Verhältnis Regeleinheit 2 zu Regelungssystem 13 im Prinzip dem Verhältnis von Verkehrsleitsystem zu Regeleinheit 2 des Kraftfahrzeuges.

Die Kommunikation zwischen der Regeleinheit 2 und den untergeordneten Regelungssystemen 13 kann insbesondere über Leitungen oder Programmschnittstellen erfolgen.

Erfindungsgemäß ist vorgesehen, dass das Kraftfahrzeug wenigstens ein, der Regeleinheit 2 hierarchisch untergeordnetes Regelungssystem 13 aufweist, und dass das untergeordnete Regelungssystem 13 mit dem Regelungsmodul 5 gekoppelt ist um Zielvorgaben 9 zu empfangen. Hierbei kann insbesondere vorgesehen sein, dass von dem Regelungsmodul 5 wenigstens eine Zielvorgabe 9 an das, der Regeleinheit 2 hierarchisch untergeordnete, Regelungssystem 13 ausgegeben wird. Diese Zielvorgabe 9 kann insbesondere ein Bewertungskriterium für ein Beurteilungsmodul eines untergeordneten Regelsystems sein. Die Zielvorgabe 9 gleicht hierbei im Sinne einer Regelhierarchie den Vorgabedaten 7. Hierbei kann die Regeleinheit 2 beispielsweise einer Motorsteuerung die Vorgabe geben, den Motor treibstoffsparend oder leistungsoptimiert zu betreiben. Weiters kann die Regeleinheit 2 einem Bremssystem die Vorgabe geben, mit welcher Verzögerung gebremst werden soll, oder welcher Bremsweg eingehalten werden soll, wobei als Bremssystem als untergeordnetes Regelungssystem 13 selbst entscheiden kann, wie dieses die Bremsen betätigt.

Erfindungsgemäß ist vorgesehen, dass das wenigstens eine untergeordnete Regelungssystem 13 mit dem Situationsinterpretationsmodul 3 gekoppelt ist, um Reserven 11 zu melden. Erfindungsgemäß ist vorgesehen, dass als Eingangsparameter 6 auch gemeldete Reserven 11 des untergeordneten Regelungssystems 13 verwendet werden. Diese gemeldeten Reserven 11 gleichen hierbei im Sinne einer Regelhierarchie den Reservedaten 8. Beispielweise kann ein untergeordnetes Regelungssystem 13 der Regeleinheit 2 melden, welche Leistungsreserven kurzfristig abrufbar sind. Oder das Bremssystem kann den Zustand der Bremsen überwachen und als Reserve 11 der Regeleinheit 2 mitteilen, welche Bremskraft maximal zur Verfügung steht. Durch diese Rückmeldungen kann das Situatiönsinterpretationsmodul 3 beispielsweise beurteilen, ob eine Notbremsung noch möglich ist oder nicht. Dabei kann die Regeleinheit 2 gegebenenfalls durch einen Ausgleich zwischen Regelungssystemen 13 die Reserve 11 erhöhen.

Weiters können diese Rückmeldungen die an das übergeordnete Verkehrsleitsystem gesendeten Reservedaten 8 beeinflussen. Das übergeordnete Verkehrsleitsystem kann dann durch eine Anpassung der Vorgabedaten 7 für andere der Kraftfahrzeuge kritische Reserven eines der Kraftfahrzeuge erhöhen.

Weiters ist vorgesehen, dass die Kommunikationseinheit 10 mit dem Situationsinterpretationsmodul 3 und dem Beurteilungsmodul 4 gekoppelt und ausgebildet ist, von einem übergeordneten Verkehrsleitsystem Vorgabedaten 7 zu empfangen und Reservedaten 8 bezüglich der Bewegungsmöglichkeiten des Kraftfahrzeuges an das übergeordnete Verkehrsleitsystem zu senden. Die Vorgabedaten 7 und die Reservedaten 8 können insbesondere digital sein. Weiters kann vorgesehen sein, dass die Kommunikationseinheit 10 eine Sende- und Empfangseinheit umfasst, welche insbesondere nach dem selben Prinzip funktionieren. Alternativ kann vorgesehen sein, dass das Senden der Vorgabedaten 7 und das Empfangen der Reservedaten 8 durch räumlich voneinander getrennte, und insbesondere unterschiedlich ausgestaltete, physikalische Komponenten der Kommunikationseinheit 10 erfolgt. Beispielsweise kann das Empfangen optisch und das Senden mittels Funk erfolgen.

Das Verfahren kann einfach mit einem Computerprogrammprodukt bereitgestellt werden, wobei das Computerprogrammprodukt direkt in den internen Speicher eines, insbesondere autonomen, Kraftfahrzeuges geladen werden kann und Softwarecodeabschnitte umfasst, mit denen die Schritte des oben beschriebenen Verfahrens ausgeführt werden, wenn das Computerprogrammprodukt auf einem Rechner des Kraftfahrzeuges läuft.

Beispielsweise kann die Software zumindest teilweise in Form von Embedded Software in dem Kraftfahrzeug bereitgestellt werden.

Weiters kann ein Computerprogrammprodukt vorgesehen sein, wobei das Computerprogrammprodukt in den Speicher eines Verkehrsleitsystems geladen werden kann und Softwarecodeabschnitte umfasst, mit denen die Schritte des oben beschriebenen Verfahrens ausgeführt werden, wenn das Computerprogrammprodukt auf einem Rechner des Verkehrsleitsystems läuft.

## Patentansprüche

1. Kraftfahrzeug umfassend eine Regeleinheit (2) zum Ausgeben von Stellgrößen zum Steuern des Kraftfahrzeuges, und eine Kommunikationseinheit (10), wobei die Regeleinheit (2) ein Situationsinterpretationsmodul (3), ein Beurteilungsmodul (4) und ein Regelungsmodul (5) umfasst, wobei das Kraftfahrzeug wenigstens ein, der Regeleinheit (2) hierarchisch untergeordnetes Regelungssystem (13) aufweist und wobei das untergeordnete Regelungssystem (13) mit dem Regelungsmodul (5) gekoppelt ist um Zielvorgaben (9) von dem Regelungsmodul (5) zu empfangen, wobei das wenigstens eine untergeordnete Regelungssystem (13) mit dem Situationsinterpretationsmodul (3) gekoppelt ist, um Reserven (11) des untergeordneten Regelungssystems (13) zu melden, wobei die Kommunikationseinheit (10) mit dem Situationsinterpretationsmodul (3) und dem Beurteilungsmodul (4) gekoppelt und ausgebildet ist, von einem übergeordneten Verkehrsleitsystem Vorgabedaten (7) zu empfangen und Reservedaten (8) bezüglich der Bewegungsmöglichkeiten des Kraftfahrzeuges an das übergeordnete Verkehrsleitsystem zu senden, wobei das Situationsinterpretationsmodul (3) ausgebildet ist, anhand von Eingangsparametern (6) ein Situationsmodell mit Modellparametern zu erstellen und aus dem Situationsmodell die Reservedaten (8) zu ermitteln, wobei das Situationsinterpretationsmodul (3) als Eingangsparameter (6) auch gemeldete Reserven (11) des untergeordneten Regelungssystems (13) verwendet, wobei das übergeordnete Verkehrsleitsystem individuelle zweite Bewertungskriterien als Vorgabedaten (7) an die einzelnen Kraftfahrzeuge vorgibt, wobei das Beurteilungsmodul (4) eingangseitig mit dem Situationsinterpretationsmodul (3) gekoppelt ist und ausgebildet ist, anhand zumindest eines in dem Beurteilungsmodul (4) abgespeicherten ersten Bewertungskriteriums, wobei das zumindest eine erste Bewertungskriterium einen vorgebbaren individuellen Fahrstil beinhaltet, zumindest eines durch die Vorgabedaten (7) vorgegebenen zweiten Bewertungskriteriums und der Modellparameter eine Regelungsstrategievorgabe zu ermitteln, wobei das Regelungsmodul (5) eingangseitig mit dem Situationsinterpretationsmodul (3) und dem Beurteilungsmodul (4) gekoppelt ist und ausgebildet ist, anhand der Regelungsstrategievorgabe und der Modellparameter die Stellgrößen zu ermitteln und auszugeben.

2. Kraftfahrzeug nach Anspruch 1, **dadurch gekennzeichnet, dass** eine Steuereinrichtung (1) eingangseitig mit der Regeleinheit (2) gekoppelt ist, und dass die Steuereinrichtung (1) anhand der von der Regeleinheit (2) ausgegebenen Stellgrößen das Kraftfahrzeug direkt steuert.

3. Kraftfahrzeug nach Anspruch 1 oder 2, **dadurch gekennzeichnet, dass** das Kraftfahrzeug ein autonomes Kraftfahrzeug ist.

4. Kraftfahrzeug nach einem der Ansprüche 1 bis 3, **dadurch gekennzeichnet, dass** das Situationsinterpretationsmodul (3), das Beurteilungsmodul (4) und/oder das Regelungsmodul (5) ein Machine-Learning-Modell, ein datengetriebenes Modell und/oder ein beispielbasiertes Modell umfasst.

5. Kraftfahrzeug nach einem der Ansprüche 1 bis 4, **dadurch gekennzeichnet, dass** das Situationsinterpretationsmodul (3), das Beurteilungsmodul (4) und/oder das Regelungsmodul (5) als eigenständige mittels Schnittstellen gekoppelte Module ausgebildet sind.

6. Kraftfahrzeug nach einem der Ansprüche 1 bis 5, **dadurch gekennzeichnet, dass** das untergeordnete Regelungssystem (13) die Motorsteuerung und/oder das ESP und/oder das ABS und/oder die Bremsen umfasst.

7. Kraftfahrzeug nach einem der Ansprüche 1 bis 6, **dadurch gekennzeichnet, dass** das untergeordnete Regelsystem (13) ausgebildet ist der Regeleinheit (2) kurzfristig abrufbare Leistungsreserven des untergeordneten Regelsystems (13) zu melden.

8. Kraftfahrzeug nach einem der Ansprüche 1 bis 7, **dadurch gekennzeichnet, dass** übergeordnete Verkehrsleitsystem durch eine Anpassung der Vorgabedaten (7) für andere der Kraftfahrzeuge kritische Reserven eines der Kraftfahrzeuge erhöht.

9. Verfahren zum Steuern eines Kraftfahrzeuges mit einer Regeleinheit (2), wobei in einem Situationsinterpretationsmodul (3) der Regeleinheit (2) anhand von Eingangsparametern (6) ein Situationsmodell mit Modellparametern erstellt, und die Modellparameter an ein Beurteilungsmodul (4) und ein Regelungsmodul (5) der Regeleinheit (2) ausgegeben werden, wobei von dem Regelungsmodul (5) wenigstens eine Zielvorgabe (9) an ein, der Regeleinheit (2) hierarchisch untergeordnetes, Regelungssystem (13) ausgegeben wird, wobei in dem Situationsinterpretationsmodul (3) aus dem Situationsmodel Reservedaten (8) bezüglich der Bewegungsmöglichkeiten des Kraftfahrzeuges ermittelt und über eine Kommunikationseinheit (10) an ein übergeordnetes Verkehrsleitsystem gesendet werden, wobei als Eingangsparameter (6) auch gemeldete Reserven (11) des untergeordneten Regelungssystems (13) verwendet werden, wobei von der Kommunikationseinheit (10) Vorgabedaten (7) des übergeordneten Verkehrsleitsystems empfangen und an das Beurteilungsmodul (4) weitergeleitet werden, wobei von dem übergeordneten Verkehrsleitsystem individuelle zweite Bewertungskriterien als Vorgabedaten (7) an die einzelnen Kraftfahrzeuge vorgegeben werden, wobei in dem Beurteilungsmodul (4) anhand zumindest eines in dem Beurteilungsmodul (4) abgespeicherten ersten Bewertungskriteriums, wobei das zumindest eine erste Bewertungskriterium einen vorgebbaren individuellen Fahrstil beinhaltet, zumindest eines durch die Vorgabedaten (7) vorgegebenen zweiten Bewertungskriteriums und der Modellparameter eine Regelungsstrategievorgabe ermittelt, und an das Regelungsmodul (5) ausgegeben wird, wobei in dem Regelungsmodul (5) anhand der Regelungsstrategievorgabe und der Modellparameter Stellgrößen ermittelt werden, wobei das Kraftfahrzeug zumindest mittelbar anhand dieser Stellgrößen gesteuert wird.

10. Verfahren nach Anspruch 9, **dadurch gekennzeichnet, dass** die zweiten Beurteilungskriterien Vorgaben bezüglich dem Verhalten gegenüber anderen Kraftfahrzeugen beinhalten.

11. Verfahren nach Anspruch 9 oder 10, **dadurch gekennzeichnet, dass** das Kraftfahrzeug mittels einer Steuereinrichtung (1) anhand der von der Regeleinheit (2) ausgegebenen Stellgrößen direkt gesteuert wird.

12. Verfahren nach einem der Ansprüche 9 bis 11, **dadurch gekennzeichnet, dass** als Eingangsparameter (6) auch die ausgegebenen Stellgrößen des Regelungsmoduls (5) verwendet werden.

13. Computerprogrammprodukt, das direkt in den internen Speicher eines Kraftfahrzeuges geladen werden kann und Softwarecodeabschnitte umfasst, mit denen die Schritte des Verfahrens gemäß einem der Ansprüche 9 bis 12 ausgeführt werden, wenn das Computerprogrammprodukt auf einem Rechner des Kraftfahrzeuges läuft.

## Claims

1. Motor vehicle, comprising a regulating unit (2) for outputting manipulated variables for controlling the motor vehicle, and a communication unit (10), wherein the regulating unit (2) comprises a situation interpretation module (3), an assessment module (4) and a regulating module (5), wherein the motor vehicle has at least one regulating system (13) hierarchically subordinate to the regulating unit (2) and wherein the subordinate regulating system (13) is coupled to the regulating module (5) in order to receive target specifications (9) from the regulating module (5), wherein the at least one subordinate regulating system (13) is coupled to the situation interpretation module (3) to report reserves (11) of the subordinate regulating system (13), wherein the communication unit (10) is coupled to the situation interpretation module (3) and the assessment module (4) and is formed to receive specification data (7) from a superordinate traffic guidance system and to transmit reserve data (8) relating to the movement options of the motor vehicle to the superordinate traffic guidance system, wherein the situation interpretation module (3) is designed using input parameters (6) to create a situation model with model parameters and to determine the reserve data (8) from the situation model, wherein the situation interpretation module (3) also uses reported reserves (11) of the subordinate regulating system (13) as input parameters (6), wherein the superordinate traffic guidance system specifies individual second assessment criteria as specification data (7) to the individual motor vehicles, wherein the assessment module (4) is coupled on the input side to the situation interpretation module (3) and is formed to determine a regulating strategy specification on the basis of at least one first assessment criterion stored in the assessment module (4), wherein the at least one first assessment criterion includes a specifiable individual driving style, at least one second assessment criterion specified by the specification data (7), and the model parameters, wherein the regulating module (5) is coupled on the input side to the situation interpretation module (3) and the assessment module (4) and is designed to determine and output the manipulated variables on the basis of the regulating strategy specification and the model parameters.

2. Motor vehicle according to claim 1, **characterized in that** a control device (1) is coupled on the input side to the regulating unit (2), and **in that** the control device (1) directly controls the motor vehicle on the basis of the manipulated variables output by the regulating unit (2).

3. Motor vehicle according to claim 1 or 2, **characterized in that** the motor vehicle is an autonomous motor vehicle.

4. Motor vehicle according to one of claims 1 to 3, **characterized in that** the situation interpretation module (3), the assessment module (4) and/or the regulating module (5) comprises a machine-learning model, a data-driven model and/or an example-based model.

5. Motor vehicle according to one of claims 1 to 4, **characterized in that** the situation interpretation module (3), the assessment module (4) and/or the regulating module (5) are designed as independent modules coupled by means of interfaces.

6. Motor vehicle according to one of claims 1 to 5, **characterized in that** the subordinate regulating system (13) comprises the engine controller and/or the ESP and/or the ABS and/or the brakes.

7. Motor vehicle according to one of claims 1 to 6, **characterized in that** the subordinate regulating system (13) is designed to report to the regulating unit (2) power reserves of the subordinate regulating system (13) which can be called up at short notice.

8. Motor vehicle according to one of claims 1 to 7, **characterized in that** the superordinate traffic guidance system increases critical reserves of one of the motor vehicles by adjusting the specification data (7) for others of the motor vehicles.

9. Method for controlling a motor vehicle with a regulating unit (2), wherein a situation model with model parameters is created in a situation interpretation module (3) of the regulating unit (2) on the basis of input parameters (6), and the model parameters are output to an assessment module (4) and a regulating module (5) of the regulating unit (2), wherein the regulating module (5) outputs at least one target specification (9) to a regulating system (13) hierarchically subordinate to the regulating unit (2), wherein reserve data (8) relating to the movement options of the motor vehicle are determined in the situation interpretation module (3) from the situation model and are transmitted via a communication unit (10) to a superordinate traffic guidance system, wherein reported reserves (11) of the subordinate regulating system (13) are also used as input parameters (6), wherein specification data (7) of the superordinate traffic guidance system are received by the communication unit (10) and forwarded to the assessment module (4), wherein individual second assessment criteria are specified as specification data (7) to the individual motor vehicles by the superordinate traffic guidance system, wherein a regulating strategy specification is determined in the assessment module (4) on the basis of at least one first assessment criterion stored in the in the assessment module (4), wherein the at least one first assessment criterion includes a predeterminable individual driving style, at least one second assessment criterion predetermined by the specification data (7) and the model parameters, and is output to the regulating module (5), wherein manipulated variables are determined in the regulating module (5) on the basis of the regulating strategy specification and the model parameters, wherein the motor vehicle is controlled at least indirectly on the basis of these manipulated variables.

10. Method according to claim 9, **characterized in that** the second assessment criteria include specifications relating to the behavior with respect to other motor vehicles.

11. Method according to claim 9 or 10, **characterized in that** the motor vehicle is controlled directly by means of a control device (1) on the basis of the manipulated variables output by the regulating unit (2).

12. Method according to one of claims 9 to 11, **characterized in that** the output manipulated variables of the regulating module (5) are also used as input parameters (6).

13. Computer program product which can be loaded directly into the internal memory of a motor vehicle and comprises software code sections with which the steps of the method according to one of claims 9 to 12 are carried out when the computer program product is running on a computer of the motor vehicle.

## Revendications

1. Véhicule à moteur comprenant une unité de régulation (2) destinée à émettre des grandeurs de réglage pour la commande du véhicule à moteur et une unité de communication (10), dans lequel l'unité de régulation (2) comprend un module d'interprétation de la situation (3), un module d'évaluation (4) et un module de régulation (5), le véhicule à moteur comprenant au moins un système de régulation (13) subordonné hiérarchiquement à l'unité de régulation (2) et le système de régulation subordonné (13) étant couplé avec le module de régulation (5) pour recevoir des valeurs de consigne (9) du module de régulation (5), l'au moins un système de régulation subordonné (13) étant couplé avec le module d'interprétation de la situation (3) pour signaler des réserves (11) du système de régulation subordonné (13), dans lequel l'unité de communication (10) est couplée avec le module d'interprétation de la situation (3) et le module d'évaluation (4) et conçue pour recevoir des données de consigne (7) d'un système de contrôle-commande de circulation de niveau supérieur et envoyer des données sur les réserves (8) concernant les possibilités de mouvement du véhicule à moteur au système de contrôle-commande de circulation de niveau supérieur, dans lequel le module d'interprétation de la situation (3) est conçu pour établir, à partir de paramètres d'entrée (6), un modèle de situation avec des paramètres de modèle et déterminer à partir du modèle de situation les données sur les réserves (8), le module d'interprétation de la situation (3) utilisant aussi comme paramètres d'entrée (6) des réserves signalées (11) du système de régulation subordonné (13), dans lequel le système de contrôle-commande de circulation de niveau supérieur transmet des deuxièmes critères d'évaluation individuels sous forme de données de consigne (7) aux différents véhicules à moteur, dans lequel le module d'évaluation (4) est couplé au module d'interprétation de la situation (3) du côté de l'entrée et conçu pour déterminer une stratégie de régulation à l'aide d'au moins un premier critère de mouvement enregistré dans le module d'évaluation (4), lequel au moins un premier critère de mouvement inclut un style de conduite individuel pouvant être prédéterminé, d'au moins un deuxième critère prédéterminé par les données de consigne (7) et des paramètres de modèle, dans lequel le module de régulation (5) est couplé du côté de l'entrée au module d'interprétation de la situation (3) et au module d'évaluation (4) et conçu pour déterminer les grandeurs de réglage à l'aide de la consigne de stratégie de régulation et des paramètres de modèle et pour les émettre en sortie.

2. Véhicule à moteur selon la revendication 1, **caractérisé en ce qu'**une installation de commande (1) est couplée à l'unité de régulation (2) du côté de l'entrée et **en ce que** l'installation de commande (1) commande directement le véhicule à moteur à l'aide des grandeurs de réglage émises en sortie par l'unité de régulation (2).

3. Véhicule à moteur selon la revendication 1 ou 2, **caractérisé en ce que** le véhicule à moteur est un véhicule à moteur autonome.

4. Véhicule à moteur selon l'une des revendications 1 à 3, **caractérisé en ce que** le module d'interprétation de la situation (3), le module d'évaluation (4) et/ou le module de régulation (5) comprennent un modèle d'apprentissage par la machine, un modèle guidé par les données et/ou un modèle basé sur des exemples.

5. Véhicule à moteur selon l'une des revendications 1 à 4, **caractérisé en ce que** le module d'interprétation de la situation (3), le module d'évaluation (4) et/ou le module de régulation (5) sont conformés comme des modules indépendants couplés au moyen d'interfaces.

6. Véhicule à moteur selon l'une des revendications 1 à 5, **caractérisé en ce que** le système de régulation subordonné (13) comprend la commande du moteur et/ou l'ESP et/ou l'ABS et/ou les freins.

7. Véhicule à moteur selon l'une des revendications 1 à 6, **caractérisé en ce que** le système de régulation subordonné (13) est conçu pour signaler à l'unité de régulation (2) les réserves de puissance du système de régulation subordonné (13) pouvant être appelées rapidement.

8. Véhicule à moteur selon l'une des revendications 1 à 7, **caractérisé en ce que** le système de contrôle-commande de circulation de niveau supérieur augmente, par une adaptation des données de consigne (7), des réserves de l'un des véhicules à moteur critiques pour d'autres véhicules à moteur.

9. Procédé pour la commande d'un véhicule à moteur avec une unité de régulation (2), dans lequel un modèle de situation avec des paramètres de modèle est créé dans un module d'interprétation de la situation (3) de l'unité de régulation (2) à l'aide de paramètres d'entrée (6) et les paramètres de modèle sont émis en sortie vers un module d'évaluation (4) et un module de régulation (5) de l'unité de régulation (2), dans lequel le module de régulation (5) émet en sortie au moins une consigne à atteindre (9) vers un système de régulation (13) subordonné hiérarchiquement à l'unité de régulation (2), dans lequel des données sur les réserves (8) concernant les possibilités de mouvement du véhicule à moteur sont déterminées à partir du modèle de situation dans le module d'interprétation de la situation (3) et transmises par une unité de communication (10) à un système de contrôle-commande de la circulation de niveau supérieur, dans lequel des réserves signalées (11) du système de régulation subordonné (13) sont aussi utilisées comme paramètres d'entrée (6), dans lequel l'unité de communication (10) reçoit des données de consigne (7) du contrôle-commande de la circulation de niveau supérieur et les transmet au module d'évaluation (4), dans lequel le contrôle-commande de la circulation de niveau supérieur transmet des deuxièmes critères de mouvement individuels aux différents véhicules à moteur comme données de consigne (7), dans lequel une stratégie de régulation est déterminée dans le module d'évaluation (4) à l'aide d'au moins un premier critère de mouvement enregistré dans le module d'évaluation (4), lequel au moins un premier critère de mouvement inclut un style de conduite individuel pouvant être prédéterminé, d'au moins un deuxième critère prédéterminé par les données de consigne (7) et des paramètres de modèle, et émis en sortie vers le module de régulation (5), dans lequel le module de régulation (5) détermine des grandeurs de réglage à l'aide de la consigne de stratégie de régulation et des paramètres de modèle, dans lequel le véhicule à moteur est au moins indirectement commandé à l'aide de ces grandeurs de réglage.

10. Procédé selon la revendication 9, **caractérisé en ce que** les deuxièmes critères d'évaluation comprennent des consignes concernant le comportement vis-à-vis d'autres véhicules à moteur.

11. Procédé selon la revendication 9 ou 10, **caractérisé en ce que** le véhicule à moteur est directement commandé au moyen d'une installation de commande (1) à l'aide des grandeurs de réglage émises en sortie par l'unité de régulation (2).

12. Procédé selon l'une des revendications 9 à 11, **caractérisé en ce que** les paramètres d'entrée (6) utilisés comprennent aussi les grandeurs de réglage émises en sortie par le module de régulation (5).

13. Programme pour ordinateur pouvant être chargé directement dans la mémoire interne d'un véhicule à moteur et comprenant des segments de code logiciel avec lesquels les étapes du procédé selon l'une des revendications 9 à 12 peuvent être exécutées quand le programme pour ordinateur s'exécute sur un calculateur du véhicule à moteur.
